# EUROPÄISCHE PATENTANMELDUNG

(11) **EP 4 006 817 A1**
(43) Veröffentlichungstag der Anmeldung: **01.06.2022**
(21) Anmeldenummer: 21206014.9
(22) Anmeldetag: 02.11.2021
(51) Int. Cl.: G06Q 50/04, G06Q 10/04

(54) **VERFAHREN ZUR FERTIGUNG WENIGSTENS EINES GEGENSTANDS**

(30) Priorität: 26.11.2020 DE 102020131419
(71) Anmelder: Norbert R., Heinz, 97532 Uechtellhausen (DE)
(72) Erfinder: Norbert R., Heinz, 97532 Uechtelhausen (DE)
(74) Vertreter: Hafner & Kohl PartmbB

(57) **Zusammenfassung**

Verfahren zur Fertigung wenigstens eines Gegenstands, umfassend die Schritte:
- Durchführen eines wenigstens einen Fertigungsschritt umfassenden Fertigungsprozesses zur Fertigung des wenigstens einen Gegenstands,
- Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt.

## Beschreibung

Die Erfindung betrifft ein Verfahren zur Fertigung wenigstens eines Gegenstands, welches ein Durchführen eines wenigstens einen Fertigungsschritt umfassenden Fertigungsprozesses zur Fertigung des wenigstens einen Gegenstands umfasst.

Die Möglichkeit der computerimplementierten Analyse bzw. Auswertung von Fertigungsprozessen im Hinblick auf bestimmte vordefinierte Analyse- bzw. Auswertungsparameter ist, z. B. im Zusammenhang mit der Implementierung einer fertigungsprozessorientierten Kosten- und/oder Qualitätsüberwachung, aus dem Stand der Technik dem Grunde nach bekannt.

Die über Analyse- bzw. Auswertungsmöglichkeiten gelieferten Analyse- bzw. Auswertungsergebnisse können, z. B. über eine automatisierbare bzw. automatische Anpassung einer oder mehrerer Fertigungsprozessparameter, zur direkten oder indirekten Steuerung und/oder Regelung eines Fertigungsprozesses verwendet werden.

Die an entsprechende Analyse- bzw. Auswertungsmöglichkeiten gestellten Anforderungen wachsen stetig; mit anderen Worten besteht ein sich stetig erweiternder Bedarf an umfangreicheren Analyse- bzw. Auswertungsmöglichkeiten von Fertigungsprozessen, um die Vorbereitung, Durchführung und Nachbereitung von Fertigungsprozessen sowohl technisch als auch wirtschaftlich verbessern zu können.

Hiervon ausgehend liegt der vorliegenden Erfindung die Aufgabe zugrunde, ein demgegenüber verbessertes Verfahren zur Fertigung eines Gegenstands anzugeben.

Die Aufgabe wird durch ein Verfahren zur Fertigung eines Gegenstands gemäß Anspruch 1 gelöst. Die hierzu abhängigen Ansprüche betreffen mögliche Ausführungsformen des Verfahrens.

Ein erster Aspekt der Erfindung betrifft ein Verfahren zur Fertigung eines Gegenstands. Das Verfahren stellt sonach im Allgemeinen ein Fertigungsverfahren dar, welches ein Durchführen eines wenigstens einen Fertigungsschritt umfassenden Fertigungsprozesses zur Fertigung wenigstens eines Gegenstands umfasst. Das Verfahren beinhaltet sonach einen ein oder mehrere Fertigungsschritte umfassenden Fertigungsprozess zur Fertigung wenigstens eines Gegenstands.

Der Begriff "Gegenstand" bezieht sich grundsätzlich sowohl auf Endprodukte, welche im Hinblick auf eine bestimmungsgemäße Verwendung des jeweilig herzustellenden bzw. hergestellten Gegenstands keiner weiteren Bearbeitung bedürfen, als auch auf, gegebenenfalls als Halbzeuge zu bezeichnende, Zwischenprodukte, welche im Hinblick auf eine bestimmungsgemäße Verwendung des jeweilig herzustellenden bzw. hergestellten Gegenstands einer weiteren Bearbeitung bedürfen, d. h. wenigstens einem weiteren Bearbeitungs- bzw. Fertigungsschritt unterzogen werden. Das Verfahren kann sonach auf die Fertigung eines Endprodukts und/oder eines Zwischenprodukts gerichtet sein.

Der Begriff "Gegenstand" ist folglich grundsätzlich nicht an eine bestimmte funktionelle wie auch geometrisch-konstruktive Ausgestaltung des jeweilig herzustellenden bzw. hergestellten Gegenstands gerichtet. Insbesondere ist der Begriff "Gegenstand" nicht auf eine bestimmte räumlich-körperliche Konstitution bzw. Raumform eines Gegenstands beschränkt. Wenngleich es sich bei einem verfahrensgemäß herzustellenden bzw. hergestellten Gegenstand typischerweise um einen oder mehrere Festkörper handelt, könnte es sich bei einem verfahrensgemäß herzustellenden bzw. hergestellten Gegenstand auch um ein Fluid, d. h. ein Gas oder eine Flüssigkeit, handeln.

Der Vollständigkeit halber soll im Zusammenhang mit einem entsprechenden Gegenstand jedoch rein beispielhaft auf einen Gegenstand eines Fahrzeugs, insbesondere eines Land-, Luft- oder Wasserfahrzeug, d. h. auf ein Fahrzeugbauteil, verwiesen werden. Mithin kann verfahrensgemäß ein Fahrzeugbauteil gefertigt werden. Das Verfahren lässt sich jedoch auch in Fertigungsbranchen außerhalb der Fahrzeugtechnik anwenden; wiederum lediglich rein beispielhaft ist an die Elektronik-, Kleidungs-, Lebensmittel- oder Pharmaziebranche zu denken.

In allen Fällen kann es sich bei einem verfahrensgemäß herzustellenden bzw. hergestellten Gegenstand, insbesondere aufgrund seiner funktionellen bzw. geometrisch-konstruktiven Gestaltung, um einen technischen Gegenstand handeln. Ein solcher technischer Gegenstand kann ein technisches Bauteil oder einen Bestandteil eines solchen bilden. Alternativ oder ergänzend kann ein solcher technischer Gegenstand eine technische Einrichtung oder einen Bestandteil einer, gegebenenfalls übergeordneten, technischen Einrichtung bilden.

Ein erster Schritt des Verfahrens umfasst die Schritte: Durchführen eines wenigstens einen Fertigungsschritt umfassenden Fertigungsprozesses zur Fertigung des wenigstens einen Gegenstands, und Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands bzw. zur Durchführung des wenigstens einen Fertigungsschritts des Fertigungsprozesses erforderlichen Energiemenge ableitbare oder abgeleitete Energieäquivalentgröße im Zusammenhang mit der Durchführung des wenigstens einen Fertigungsschritts und somit im Zusammenhang mit der Fertigung des wenigstens einen Gegenstands beschreibt.

In dem ersten Schritt des Verfahrens wird sonach ein Fertigungsprozess zur Fertigung des wenigstens einen Gegenstands durchgeführt. Der Fertigungsprozess umfasst, wie angedeutet, wenigstens einen Fertigungsschritt. Der Fertigungsprozess kann je nach jeweilig herzustellendem Gegenstand z. B. wenigstens einen Urformprozess und/oder wenigstens einen Umformprozess und/oder wenigstens einen Fügeprozess und/oder wenigstens einen Trennprozess und/oder wenigstens einen Beschichtungsprozess und/oder wenigstens einen Stoffeigenschaftsänderungsprozess beinhalten. Ein entsprechender Fertigungsschritt kann sonach z. B. wenigstens einen Urformschritt und/oder wenigstens einen Umformschritt und/oder wenigstens einen Fügeschritt und/oder wenigstens einen Trennschritt und/oder wenigstens einen Beschichtungsschritt und/oder wenigstens einen Stoffeigenschaftsänderungsschritt beinhalten.

In einem zweiten Schritt des Verfahrens wird wenigstens einem Fertigungsschritt des Fertigungsprozesses wenigstens eine die Fertigung des wenigstens einen Gegenstands betreffende Energieäquivalentinformation zugeordnet. Die wenigstens eine Energieäquivalentinformation beschreibt eine aus der zur Durchführung des wenigstens einen Fertigungsschritts erforderlichen Energiemenge ableitbare oder abgeleitete Energieäquivalentgröße. Die wenigstens eine Energieäquivalentinformation beschreibt sonach fertigungsschrittspezifisch eine aus der zur Fertigung des wenigstens einen Gegenstands erforderlichen Energiemenge ableitbare oder abgeleitete Energieäquivalentgröße im Zusammenhang mit der Fertigung des wenigstens einen Gegenstands. Eine entsprechende Energieäquivalentgröße stellt typischerweise eine andere Größe als die Einheit der zur Fertigung des wenigstens einen Gegenstands erforderlichen Energiemenge, bei welcher es sich z. B. um Joule bzw. Kilojoule handelt, dar.

Der zweite Schritt beinhaltet sonach typischerweise eine Analyse bzw. Auswertung des in dem ersten Schritt durchzuführenden bzw. durchgeführten Fertigungsprozesses, d. h. wenigstens eines Fertigungsschritts des in dem ersten Schritt durchzuführenden bzw. durchgeführten Fertigungsprozesses, im Hinblick auf die zur Fertigung des wenigstens einen Gegenstands erforderliche Energiemenge und die Erzeugung einer Energieäquivalentinformation, welche eine aus der zur Fertigung des wenigstens einen Gegenstands fertigungsschrittspezifisch erforderlichen Energiemenge ableitbare oder abgeleitete Energieäquivalentgröße beschreibt. Eine entsprechende Energieäquivalentinformation kann sich sonach unmittelbar oder mittelbar auf die im Rahmen der Fertigung des wenigstens einen Gegenstands auf einzelne, mehrere oder sämtliche Fertigungsschritte (jeweilig) anfallende Energiemenge und somit fertigungsschrittspezifisch auch auf den jeweiligen Energieverbrauch beziehen. Eine entsprechende Energieäquivalentinformation kann sonach eine umfassende Beurteilung der im Rahmen der Fertigung des wenigstens einen Gegenstands auf einzelne, mehrere oder sämtliche Fertigungsschritte (jeweilig) anfallende Energiemengen und eine Art Normierung dieser über entsprechende Energieäquivalente ermöglichen.

Der Begriff "Energiemenge" kann sich dabei auf die unmittelbar oder mittelbar zur Fertigung des wenigstens einen Gegenstands erforderliche Menge an Energie beziehen. Der Begriff "Energie" kann sich grundsätzlich auf jedwede Energieform beziehen, sodass lediglich beispielhaft und damit nicht abschließend auf elektrische, kinematische, mechanische, pneumatische oder thermische Energie verwiesen wird.

Durch die fertigungsschrittspezifische Zuordnung einer entsprechenden Energieäquivalentinformation ist es sonach möglich, die im Rahmen der Fertigung des wenigstens einen Gegenstands in unterschiedlichen Fertigungsschritten jeweilig anfallenden und gegebenenfalls ihrer Energieform nach unterschiedlichen Energiemengen aussagekräftig und einfach zu bewerten sowie gegebenenfalls zu vergleichen, als für die jeweiligen Fertigungsschritte jeweils Energieäquivalente betrachtet werden können. Durch die mit einer entsprechenden Energieäquivalentinformation sonach in normierbaren bzw. normierten Energieäquivalentgrößen erfolgende Angabe der jeweiligen fertigungsschrittspezifisch erforderlichen Energiemengen über die aus diesen ableitbare bzw. abgeleitete Energieäquivalentgröße, wie z. B. ein anschauliches sowie sinnvoll vergleichbares CO₂-Äquivalent, ist sonach eine sehr aussagekräftige und einfach automatisierbare Möglichkeit der Analyse und Bewertung eines Fertigungsprozesses im Hinblick auf einen aktuellen und/oder künftigen Energieverbrauch möglich.

Eine entsprechende vermittels einer Energieäquivalentinformation, gegebenenfalls einfach automatisierbar, mögliche Analyse und Bewertung eines Fertigungsprozesses kann, wie sich im Weiteren ergibt, die Grundlage für eine, gegebenenfalls steuerungs- und/oder regelungstechnische, Änderung bzw. Anpassung wenigstens eines Fertigungsschritts, insbesondere wenigstens eines fertigungsschrittspezifischen Fertigungsprozessparameters und/oder eines Materialparameters, des jeweiligen Fertigungsprozesses bilden. Eine entsprechende Änderung bzw. Anpassung erfolgt typischerweise im Hinblick auf wenigstens ein Zielkriterium, welches z. B. eine Reduzierung der insgesamt zur Fertigung des wenigstens einen Gegenstands erforderlichen Energiemenge betreffen kann.

Insgesamt liegt damit ein verbessertes Verfahren zu Fertigung wenigstens eines Gegenstands vor.

Zur Erzeugung einer entsprechenden Energieäquivalentinformation kann die im Rahmen der Fertigung des wenigstens einen Gegenstands für einzelne, mehrere oder sämtliche Fertigungsschritte (jeweilige) anfallende Energiemenge, z. B. durch Messungen, Untersuchungen, Simulationen oder durch Umwandlung anderer im Zusammenhang mit dem Fertigungsprozess erfasster Größen, wie insbesondere fertigungsprozessbezogener Kosten, bestimmt bzw. ermittelt werden und die derart, insbesondere fertigungsschrittspezifisch, bestimmten bzw. ermittelten Energiemengen in eine entsprechende Energieäquivalentgröße, wie z. B. in das bereits erwähnte CO₂-Äquivalent, umgerechnet werden.

Die Erzeugung einer entsprechenden Energieäquivalentinformation kann computerimplementiert, d. h. insbesondere mittels geeigneter Algorithmen, erfolgen, welche eingerichtet sind, aus Daten bzw. Informationen, welche die zur Fertigung des wenigstens einen Gegenstands fertigungsschrittspezifisch erforderliche Energiemenge betreffen, Energieäquivalentgrößen abzuleiten. Entsprechende Energieäquivalentinformationen können auf Grundlage entsprechender Energieäquivalentgrößen, wie z. B. CO₂-Äquivalente, erzeugt werden.

Selbstverständlich kann die Bestimmung bzw. Ermittlung der im Rahmen jeweiliger Fertigungsschritte jeweilig anfallender Energiemengen auch prognostisch bzw. simulativ erfolgen; mithin kann eine Energieäquivalentinformation nicht nur eine Energieäquivalentgröße beschreiben, welche sich auf eine (jeweilige) aktuelle Energiemenge einzelner, mehrerer oder sämtlicher Fertigungsschritte im Rahmen der Fertigung des wenigstens einen Gegenstands bezieht. Alternativ oder ergänzend kann eine Energieäquivalentinformation sonach eine Energieäquivalentgröße beschreiben, welche sich auf eine (jeweilige) künftige Energiemenge einzelner, mehrerer oder sämtlicher Fertigungsschritte im Rahmen der Fertigung des wenigstens einen Gegenstands bezieht. Eine entsprechende künftige Energiemenge einzelner, mehrerer oder sämtlicher Fertigungsschritte im Rahmen der Fertigung des wenigstens einen Gegenstands kann z. B. durch Prognosen bzw. Simulationen bestimmt bzw. ermittelt werden.

Wie erwähnt, kann ein im Rahmen des ersten Schritts des Verfahrens durchgeführter Fertigungsprozess mehrere Fertigungsschritte umfassen. Verfahrensgemäß ist es möglich, dass jedem Fertigungsschritt eine (eigene) Energieäquivalentinformation zugeordnet wird. Mithin ist es möglich, dass ein Fertigungsprozess durch die jeweiligen Fertigungsschritten zugeordneten Energieäquivalentinformationen im Hinblick auf die den für die jeweiligen Fertigungsschritte erforderlichen Energiemengen entsprechenden Energieäquivalente fertigungsschrittspezifisch aufgelöst analysiert und bewertet werden. Derart lassen sich sehr aussagekräftige Vergleiche der Energieverbräuche der jeweiligen Fertigungsschritte anstellen sowie Fertigungsschritte identifizieren, welche die insgesamt zur Fertigung eines jeweiligen Gegenstands erforderliche Energiemenge erheblich beeinflussen.

Eine entsprechende Energieäquivalentinformation kann in allen Fällen bezogen auf wenigstens einen Fertigungsschritt einen Energieäquivalentanteil wenigstens eines Fertigungsprozessparameters und/oder Materialparameters beinhalten. Jeder Fertigungsschritt kann sonach in wenigstens einen Fertigungsprozessparameter und/oder in wenigstens einen Materialparameter aufgeteilt werden. Ein Fertigungsprozessparameter beinhaltet typischerweise einzelne, mehrere oder sämtliche sich unmittelbar oder mittelbar auf die zur Durchführung des jeweiligen Fertigungsschritts im Rahmen der Fertigung des wenigstens einen Gegenstands erforderliche Energiemenge fertigungsprozessbedingt auswirkenden Parameter. Hierzu zählen insbesondere Anlagen- und/oder Betriebsparameter einer zur Durchführung des jeweiligen Fertigungsschritts verwendeten Fertigungseinrichtung bzw. -maschine. Ein Materialparameter beinhaltet typischerweise einzelne, mehrere oder sämtliche sich unmittelbar oder mittelbar auf die zur Durchführung des jeweiligen Fertigungsschritts im Rahmen der Fertigung des wenigstens einen Gegenstands erforderliche Energiemenge materialbedingt auswirkenden Parameter. Hierzu zählen insbesondere chemische und/oder physikalische Parameter eines zur Durchführung des jeweiligen Fertigungsschritts verwendeten, d. h. insbesondere zu verarbeitenden bzw. verarbeiteten, Materials.

Ein Fertigungsprozessparameter kann sonach z. B. eine zur Fertigung des wenigstens einen Gegenstands verwendete Fertigungsumgebung, insbesondere wenigstens eine zur Fertigung des wenigstens einen Gegenstands verwendete Fertigungseinrichtung bzw. -maschine und/oder wenigstens ein zur Fertigung des wenigstens einen Gegenstands verwendetes Fertigungswerkzeug, betreffen.

Alternativ oder ergänzend kann ein Fertigungsprozessparameter z. B. die Verpackung des wenigstens einen Gegenstands vor und/oder während und/oder nach einem jeweiligen Fertigungsschritt betreffen. Mithin kann auch die Verpackung des wenigstens einen Gegenstands in die zur Durchführung eines jeweiligen Fertigungsschritts bzw. Fertigungsprozesses erforderliche Energiemenge und somit in eine entsprechende Energieäquivalentinformation eingehen.

Alternativ oder ergänzend kann ein Fertigungsprozessparameter z. B. den Transport des wenigstens einen Gegentands vor und/oder während und/oder nach einem jeweiligen Fertigungsschritt betreffen. Mithin kann auch der Transport des wenigstens einen Gegenstands in die zur Durchführung eines jeweiligen Fertigungsschritts bzw. Fertigungsprozesses erforderliche Energiemenge und somit in eine entsprechende Energieäquivalentinformation eingehen.

Alternativ oder ergänzend kann ein Fertigungsprozessprozessparameter einen Fertigungsstandort, insbesondere innerhalb einer Fertigungsanlage, wie z. B. einer Fabrik und/oder zwischen unterschiedlichen Fertigungsanlagen, wie z. B. unterschiedlichen Fabriken, des wenigstens einen Gegenstands betreffen. Mithin kann auch ein aktueller oder künftiger Fertigungsstandort in die zur Durchführung eines jeweiligen Fertigungsschritts bzw. Fertigungsprozesses erforderliche Energiemenge und somit in eine entsprechende Energieäquivalentinformation eingehen.

Alternativ oder ergänzend kann ein Fertigungsprozessprozessparameter eine Fertigungszeit, insbesondere eine Tages-, Monats- oder Jahreszeit, des wenigstens einen Gegenstands betreffen. Mithin kann auch eine aktuelle oder künftige Fertigungszeit in die zur Durchführung eines jeweiligen Fertigungsschritts bzw. Fertigungsprozesses erforderliche Energiemenge und somit in eine entsprechende Energieäquivalentinformation eingehen.

Alternativ oder ergänzend kann ein Fertigungsprozessparameter das zur Fertigung des wenigstens einen Gegenstands unmittelbar oder mittelbar eingesetzte Personal betreffen. Mithin können auch Parameter eines aktuellen oder künftigen Personals in die zur Durchführung eines jeweiligen Fertigungsschritts bzw. Fertigungsprozesses erforderliche Energiemenge und somit in eine entsprechende Energieäquivalentinformation eingehen. Entsprechende Parameter können den Energieverbrauch des Personals - hierbei kann es sich sowohl um Fertigungspersonal, wie z. B. um Werkerpersonal, als auch um Verwaltungspersonal, wie z. B. um Logistik- oder Vertriebspersonal, handeln - im Rahmen von mittelbar oder unmittelbar im Zusammenhang mit der Fertigung des wenigstens einen Gegenstands stehenden Tätigkeiten, wie z. B. der Bedienung oder Einstellung von Fertigungseinrichtungen bzw. -maschinen, oder im Rahmen von nicht mittelbar oder unmittelbar im Zusammenhang mit der Fertigung des wenigstens Gegenstands stehenden Tätigkeiten, wie z. B. dem Arbeitsweg, dem Besuch von Kantinen, sanitären Einrichtungen, etc., oder entsprechenden Erfordernissen, wie z. B. Klimatisierung und/oder Temperierung der Arbeits- oder Betriebsräume, betreffen. Der Energieverbrauch des Personals kann sonach umfassend berücksichtigt werden und in eine entsprechende Energieäquivalentinformation eingehen.

Ein Materialparameter kann sonach z. B. ein zur Fertigung des wenigstens einen Gegenstands verwendbares oder verwendetes Material betreffen. Mithin kann das im

Rahmen der Durchführung wenigstens eines Fertigungsschritts verwendete Material in die zur Durchführung des jeweiligen Fertigungsschritts bzw. Fertigungsprozesses erforderliche Energiemenge und somit in eine entsprechende Energieäquivalentinformation eingehen.

Alternativ oder ergänzend kann ein Materialparameter einen, z. B. den Transport des Materials vor und/oder während und/oder nach einem jeweiligen Fertigungsschritt betreffen. Mithin kann auch der Transport eines Materials in die zur Durchführung eines jeweiligen Fertigungsschritts bzw. Fertigungsprozesses erforderliche Energiemenge und somit in eine entsprechende Energieäquivalentinformation eingehen.

Alternativ oder ergänzend kann ein Materialparameter einen, z. B. die Verpackung des Materials vor und/oder während und/oder nach einem jeweiligen Fertigungsschritt betreffen. Mithin kann auch die Verpackung eines Materials in die zur Durchführung eines jeweiligen Fertigungsschritts bzw. Fertigungsprozesses erforderliche Energiemenge und somit in eine entsprechende Energieäquivalentinformation eingehen.

Fertigungsprozessparameter und/oder Materialparameter umfassen sonach grundsätzlich sämtliche Parameter einer zentralen oder dezentralen Fertigungsinfrastruktur, welche den Energieverbrauch bei der Fertigung eines jeweiligen Gegenstands direkt oder indirekt beeinflussen. Angesprochen sind neben den eigentlichen Fertigungsstrukturen, d. h. insbesondere den eingesetzten Fertigungseinrichtungen bzw. -maschinen, auch sonstige sich auf die Energiebilanz der Fertigung des wenigstens einen Gegenstand beziehbare Strukturen. Hierzu zählen z. B. Vertriebsstrukturen, insbesondere im Zusammenhang mit dem Einkauf, der Verpackung und/oder dem Transport von zur Fertigung eines jeweiligen Gegenstands erforderlichen Materialien, und/oder im Zusammenhang mit dem Verkauf, der Verpackung und/oder dem Transport von gefertigten Gegenständen, Verwaltungsstrukturen, insbesondere im Zusammenhang mit der Verwaltung der Fertigung und/oder des Vertriebs des jeweiligen Gegenstands, oder sonstige Personalstrukturen sein. Auch sonstige Ressourcen, wie z. B. unmittelbar oder mittelbar im Zusammenhang mit der Fertigung eines jeweiligen Gegenstands stehende Energie- oder Personalressourcen, im Allgemeinen auf einen jeweiligen Fertigungsprozess beziehbare Einzel- oder Gemeinkosten jeder Art, können dem Grunde nach berücksichtigt werden.

Das Verfahren kann in allen Ausführungsformen ein, gegebenenfalls automatisierbares bzw. automatisiertes, Vorgeben einer einen Sollenergieverbrauch der Fertigung des wenigstens einen Gegenstands betreffenden Sollinformation, ein Vergleichen des durch die Energieäquivalentinformation beschriebenen Energieverbrauchs mit dem durch die Sollinformation beschriebenen Sollenergieverbrauch, und Erzeugen einer das Vergleichsergebnis beschreibenden Vergleichsinformation umfassen. Das Vorgeben einer einen Sollenergieverbrauch der Fertigung des wenigstens einen Gegenstands betreffenden Sollinformation, das Vergleichen des durch die Energieäquivalentinformation beschriebenen Energieverbrauchs mit dem durch die Sollinformation beschriebenen Sollenergieverbrauch, und das Erzeugen einer das Vergleichsergebnis beschreibenden Vergleichsinformation können jeweils computerimplementiert, d. h. insbesondere vermittels einer oder mehreren hardware- und/oder softwaremäßig implementierten Einrichtungen, d. h. insbesondere Steuereinrichtungen, durchgeführt werden. Entsprechende Einrichtungen können über geeignete Vorgabe- und Vergleichsalgorithmen verfügen. Entsprechende Vorgabe- und Vergleichsalgorithmen können durch künstliche neuronale Netze, d. h. im Allgemeinen durch Prinzipien des maschinellen Lernens bzw. der künstlichen Intelligenz, implementiert werden.

Das Verfahren kann in entsprechenden Ausführungsformen ferner ein, gegebenenfalls automatisierbares bzw. automatisiertes, Vorschlagen einer Änderung bzw. Anpassung wenigstens eines Fertigungsprozessparameters und/oder Materialparameters des Fertigungsprozesses beinhalten, wenn ein vordefinierbarer oder vordefinierter Abweichungsgrenzwert über- oder unterschritten wird (oder droht, über- oder unterschritten zu werden), insbesondere derart, dass der vordefinierbare oder vordefinierte Abweichungsgrenzwert bei Vornahme der vorgeschlagenen Änderung bzw. Anpassung nicht mehr über- oder unterschritten wird. Das Vorschlagen einer Änderung wenigstens eines Fertigungsprozessparameters und/oder Materialparameters des Fertigungsprozesses kann ebenso computerimplementiert, d. h. insbesondere vermittels einer oder mehreren hardware- und/oder softwaremäßig implementierten Einrichtungen, d. h. insbesondere Steuereinrichtungen, durchgeführt werden. Entsprechende Einrichtungen können über geeignete Vorschlagsalgorithmen verfügen. Entsprechende Vorschlagsalgorithmen können durch künstliche neuronale Netze, d. h. im Allgemeinen durch Prinzipien des maschinellen Lernens bzw. der künstlichen Intelligenz, implementiert werden.

Das Verfahren kann in entsprechenden Ausführungsformen ferner ein, gegebenenfalls automatisierbares bzw. automatisiertes, Ändern bzw. Anpassen wenigstens eines Fertigungsprozessparameters und/oder Materialparameters des Fertigungsprozesses beinhalten, wenn eine entsprechende Vergleichsinformation angibt, dass ein vordefinierbarer oder vordefinierter Abweichungsgrenzwert über- oder unterschritten ist, insbesondere derart, dass der vordefinierbare oder vordefinierte Abweichungsgrenzwert nicht mehr über- oder unterschritten wird. Die Änderung bzw. Anpassung wenigstens eines Fertigungsprozessparameters und/oder Materialparameters des Fertigungsprozesses kann unter Berücksichtigung eines entsprechenden Vorschlags erfolgen. Das Ändern bzw. Anpassen wenigstens eines Fertigungsprozessparameters und/oder Materialparameters des Fertigungsprozesses kann ebenso computerimplementiert, d. h. insbesondere vermittels einer oder mehreren hardware- und/oder softwaremäßig implementierten Einrichtungen, d. h. insbesondere Steuereinrichtungen, durchgeführt werden. Entsprechende Einrichtungen können über geeignete Änderungs- bzw. Anpassungsalgorithmen verfügen. Entsprechende Änderungs- bzw. Anpassungsalgorithmen können durch künstliche neuronale Netze, d. h. im Allgemeinen durch Prinzipien des maschinellen Lernens bzw. der künstlichen Intelligenz, implementiert werden.

Aus vorstehenden Ausführungen ergibt sich, dass das Verfahren, gegebenenfalls in Echtzeit, auch eine Steuerung bzw. Regelung, d. h. insbesondere auch Optimierung, eines Fertigungsprozesses zur Fertigung wenigstens eines Gegenstands, insbesondere durch entsprechende Änderung bzw. Anpassung von Fertigungsprozessparametern und/oder Materialparametern, beinhalten kann.

Eine entsprechende Energieäquivalentinformation kann verfahrensgemäß an oder über wenigstens ein Ausgabeelement ausgegeben werden. Das Verfahren kann sonach ein akustisches, optisches, und/oder haptisches Ausgeben der Energieäquivalentinformation an wenigstens einem oder über wenigstens ein Ausgabeelement beinhalten. Das Ausgeben kann ein Ausgeben der Energieäquivalentinformation an einem Ausgabeelement, insbesondere einem Display, einer Ausgabeeinrichtung beinhalten. Das Ausgaben kann beispielsweise über alphanumerische und/oder graphische Symbole erfolgen. Alternativ oder ergänzend kann das Ausgeben ein datenmäßiges Übertragen - dieses kann kabelgebunden oder kabellos erfolgen - der Energieäquivalentinformation an wenigstens einen externen Kommunikationspartner beinhalten. Zur Übertragung können verschiedene Datenübertragungsstandards bzw. -protokolle verwendet werden, sodass lediglich beispielhaft auf Intranet- oder Internetstandards bzw. - protokolle verwiesen wird.

Es wurde erwähnt, dass zur Erzeugung einer entsprechenden Energieäquivalentinformation die im Rahmen der Fertigung des wenigstens einen Gegenstands für einzelne, mehrere oder sämtliche Fertigungsschritte (jeweilige) anfallende Energiemenge, z. B. durch Messungen, Untersuchungen, Simulationen oder durch Umwandlung anderer im Zusammenhang mit dem Fertigungsprozess erfasster Größen, wie insbesondere fertigungsprozessbezogener Kosten, bestimmt bzw. ermittelt werden und die derart, insbesondere fertigungsschrittspezifisch, bestimmten bzw. ermittelten Energiemengen in eine entsprechende Energieäquivalentgröße, wie z. B. in ein CO₂-Äquivalent, umgerechnet werden können. Eine Energieäquivalentinformation kann sonach grundsätzlich anhand bzw. auf Grundlage von den Energieverbrauch der zur Fertigung des wenigstens einen Gegenstands erforderlichen Energiemenge betreffenden Messungen oder Untersuchungen oder anhand bzw. auf Grundlage von den Energieverbrauch der zur Fertigung des wenigstens einen Gegenstands erforderlichen Energiemenge betreffenden Simulationen erzeugt werden.

Zweckmäßig kann eine Energieäquivalentinformation jedoch anhand bzw. auf Grundlage von die Fertigung des wenigstens einen Gegenstands betreffenden Kosteninformationen erzeugt werden. Dieser besonders effiziente Ansatz zu Erzeugung einer entsprechenden Energieäquivalentinformation beruht auf der Idee, vorliegende Informationen zu, gegebenenfalls detailliert, z. B. nach Fertigungsprozessparametern und/oder Materialparametern, aufgeschlüsselten, Kosten zur Erzeugung entsprechender Energieäquivalentinformation zu nutzen. Entsprechende Kosteninformationen können sonach computerimplementiert, d. h. z. B. über geeignete Algorithmen, dahingehend verarbeitet werden, um aus diesen Energieäquivalente und sonach Energieäquivalentinformationen abzuleiten. Der rechnerische Aufwand zur Erzeugung entsprechender Energieäquivalentinformationen kann derart gegebenenfalls erheblich reduziert werden, als auf bereits vorliegende Informationen, d. h. entsprechende Kosteninformationen, zurückgegriffen werden kann.

Das Verfahren kann in allen Ausführungsformen ferner ein Bereitstellen einer hardware- und/oder softwaremäßig implementierten Datenbankstruktur und ein, insbesondere nutzerseitiges, Anreichern dieser mit individuellen Informationen zur Erzeugung der wenigstens einen Energieäquivalentinformation beinhalten. Mithin können die der Erzeugung einer entsprechender Energieäquivalentinformation zugrundeliegenden Daten bzw. Informationen stetig erweitert werden, was zu noch aussagekräftigeren und exakteren Energieäquivalentinformationen führen kann.

Bei dem Verfahren kann es sich in allen Ausführungsformen zumindest teilweise um ein computerimplementiertes Verfahren handeln. Insbesondere kann der zweite Schritt des Zuordnens einer entsprechenden Energieäquivalentinformation computerimplementiert durchgeführt werden.

Ein zweiter Aspekt der Erfindung betrifft ein Verfahren zur Bewertung des Energieverbrauchs eines Fertigungsprozesses wenigstens eines Gegenstands anhand einer Energieäquivalentinformation. Das Verfahren umfasst die folgenden Schritte: Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt, zu wenigstens einem Fertigungsschritt des Fertigungsprozesses; Bewerten der Energieäquivalentinformation im Hinblick auf wenigstens ein Bewertungskriterium, wie z. B. ein einen bestimmten Energieverbrauch betreffendes Kriterium; und Erzeugen einer ein Bewertungsergebnis beschreibenden Bewertungsinformation.

Das Verfahren gemäß dem zweiten Aspekt der Erfindung kann analog dem Verfahren gemäß dem ersten Aspekt der Erfindung zumindest teilweise computerimplementiert durchgeführt werden.

Das Verfahren kann ferner ein Steuern oder Regeln wenigstens eines Fertigungsprozessparameters und/oder Materialparameters wenigstens eines Fertigungsschritts auf Grundlage der Bewertungsinformation beinhalten. Das Steuern oder Regeln kann ein Ändern des jeweiligen Fertigungsprozessparameters und/oder Materialparameters beinhalten.

Sämtliche Ausführungen im Zusammenhang mit dem Verfahren gemäß dem ersten Aspekt der Erfindung gelten analog für das Verfahren gemäß dem zweiten Aspekt der Erfindung und umgekehrt.

Ein dritter Aspekt der Erfindung betrifft ein System zur Fertigung wenigstens eines Gegenstands. Das System umfasst wenigstens eine Fertigungseinrichtung, wie z. B. eine Fertigungsmaschine, welche zum Durchführen eines wenigstens einen Fertigungsschritt umfassenden Fertigungsprozesses zur Fertigung des wenigstens einen Gegenstands eingerichtet ist; und wenigstens eine hardware- und/oder softwaremäßig implementierte Datenverarbeitungseinrichtung, welche zum Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt, eingerichtet ist.

Sämtliche Ausführungen im Zusammenhang mit dem Verfahren gemäß dem ersten Aspekt der Erfindung gelten analog für das System gemäß dem dritten Aspekt der Erfindung und umgekehrt.

Ein vierter Aspekt der Erfindung betrifft ein System zur Bewertung des Energieverbrauchs eines Fertigungsprozesses wenigstens eines Gegenstands anhand einer Energieäquivalentinformation. Das System umfasst eine hardware- und/oder softwaremäßig implementierte Zuordnungseinrichtung, welche zum Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt, zu wenigstens einem Fertigungsschritt eines Fertigungsprozesses eingerichtet ist; und eine hardware- und/oder softwaremäßig implementierte Bewertungseinrichtung, welche zum Bewerten der Energieäquivalentinformation im Hinblick auf wenigstens ein Bewertungskriterium und Erzeugen einer ein Bewertungsergebnis beschreibenden Bewertungsinformation eingerichtet ist. Die Zuordnungseinrichtung und/oder die Bewertungseinrichtung können hardware- und/oder softwaremäßig implementierte Bestandteile einer Datenverarbeitungseinrichtung bilden.

Sämtliche Ausführungen im Zusammenhang mit dem Verfahren gemäß dem zweiten Aspekt der Erfindung gelten analog für das System gemäß dem vierten Aspekt der Erfindung und umgekehrt.

Jeweilige Systeme können ein oder mehrere Nutzerschnittstellen umfassen, über welche ein Nutzer z. B. individuelle Daten eingeben kann, die bei der Ermittlung einer entsprechenden Energieäquivalentinformation bzw. der Bewertung des Energieverbrauchs eines Fertigungsprozesses berücksichtigt werden können.

Ein fünfter Aspekt der Erfindung betrifft ein Computerprogrammprodukt für eine Datenverarbeitungseinrichtung eines Systems gemäß dem dritten oder vierten Aspekt der Erfindung. Das Computerprogrammprodukt, umfasst Befehle zum Zuordnen wenigstens einer die Fertigung des wenigstens einen Gegenstands betreffenden Energieäquivalentinformation zu wenigstens einem Fertigungsschritt eines Fertigungsprozesses zum Fertigen wenigstens eines Gegenstands, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt. Das Computerprogrammprodukt umfasst sonach im Allgemeinen Befehle zur zumindest teilweisen Durchführung der Verfahren gemäß dem ersten und/oder zweiten Aspekt der Erfindung.

Sämtliche Ausführungen im Zusammenhang mit dem Verfahren gemäß dem ersten und/oder zweiten Aspekt der Erfindung gelten analog für das Computerprogrammprodukt gemäß dem fünften Aspekt der Erfindung und umgekehrt.

Ein sechster Aspekt der Erfindung betrifft einen computerlesbaren Datenträger- dieser kann z. B. als flüchtiger oder nicht-flüchtiger Datenträger ausgeführt sein, auf dem das Computerprogrammprodukt gemäß dem fünften Aspekt der Erfindung gespeichert ist. Sämtliche Ausführungen im Zusammenhang mit dem Verfahren gemäß dem ersten und/oder zweiten Aspekt der Erfindung gelten analog für den computerlesbaren Datenträger gemäß dem fünften Aspekt der Erfindung und umgekehrt.

Die Erfindung ist anhand von Ausführungsbeispielen nochmals unter Bezugnahme auf die Zeichnungen erläutert. Dabei zeigt:
Fig. 1 eine Prinzipdarstellung eines Systems zur Fertigung wenigstens eines Gegenstands gemäß einem Ausführungsbeispiel; und
Fig. 2 ein Flussdiagramm zur Veranschaulichung eines Verfahrens gemäß einem Ausführungsbeispiel; und
Fig. 3 ein Flussdiagramm zur Veranschaulichung eines beispielhaften Fertigungsprozesses zur Fertigung wenigstens eines Gegenstands.

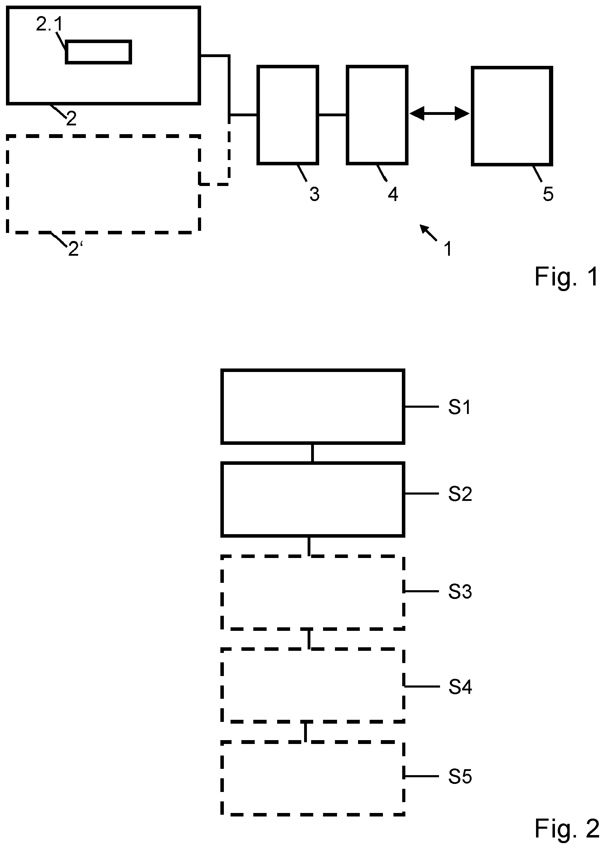

Fig. 1 zeigt eine Prinzipdarstellung eines Systems 1 zur Fertigung wenigstens eines Gegenstands gemäß einem Ausführungsbeispiel.

Das System 1 umfasst wenigstens eine Fertigungseinrichtung 2, wie z. B. eine Fertigungsmaschine, welche zum Durchführen eines wenigstens einen Fertigungsschritt umfassenden Fertigungsprozesses zur Fertigung des wenigstens einen Gegenstands, bei welchem es sich z. B. um ein technisches Bauteil oder um eine technische Einrichtung handeln kann, eingerichtet ist.

Die Fertigungseinrichtung 2 kann z. B. zur, gegebenenfalls automatisierbaren, Durchführung wenigstens eines Urformprozesses und/oder wenigstens eines Umformprozesses und/oder wenigstens eines Fügeprozesses und/oder wenigstens eines Trennprozesses und/oder wenigstens eines Beschichtungsprozesses und/oder wenigstens eines Stoffeigenschaftsänderungsprozesses eingerichtet sein.

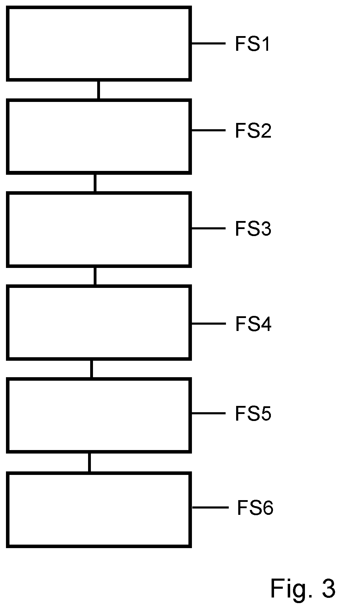

Wie im Zusammenhang mit dem in Fig. 3 beispielhaft dargestellten Fertigungsprozess zur Fertigung wenigstens eines Gegenstands erläutert, kann es sich bei der Fertigungseinrichtung 2 z. B. um eine Schmiedeeinrichtung z. B. zur Herstellung eines Pleuels handeln, welche mehrere Funktionseinheiten zur Durchführung unterschiedlicher Fertigungsschritte des Fertigungsprozesses umfasst.

Der Betrieb der Fertigungseinrichtung 2 kann über eine dieser zuordenbare oder zugeordnete hardware- und/oder softwaremäßig implementierte Steuereinrichtung 2.1 geregelt oder gesteuert werden.

Das System 1 umfasst ferner eine hardware- und/oder softwaremäßig implementierte Datenverarbeitungseinrichtung 3, welche zum Zuordnen wenigstens einer die Fertigung des wenigstens einen Gegenstands betreffenden Energieäquivalentinformation zu wenigstens einem vermittels der Fertigungseinrichtung 2 oder wenigstens einer weiteren Fertigungseinrichtung 2' (strichliert dargestellt, weil optional) durchgeführten Fertigungsschritt des Fertigungsprozesses eingerichtet ist. Eine entsprechende Energieäquivalentinformation beschreibt eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts vermittels der Fertigungseinrichtung 2 oder wenigstens einer weiteren Fertigungseinrichtung 2'.

Ferner umfasst das System 1 eine der Datenverarbeitungseinrichtung 3 zuordenbare oder zugeordnete Ausgabeeinrichtung 4, welche zum Ausgeben einer entsprechenden Energieäquivalentinformation an einem Ausgabeelement und/oder zum datenmäßigen Übertragen einer entsprechenden Energieäquivalentinformation an einen externen Kommunikationspartner 5 - hierbei kann es beispielsweise um ein (mobiles) Endgerät, wie z. B. ein Smartphone, ein Tablet, eine Smartwatch, und/oder um einen Cloud-Server bzw. -speicher handeln, eingerichtet ist. Die Ausgabeeinrichtung 4 kann sonach z. B. akustische, optische, und/oder haptische Ausgabeeinrichtung und/oder als Datenübertragungseinrichtung ausgebildet sein.

Mit dem in Fig. 1 gezeigten System 1 lässt sich ein Verfahren zur Fertigung wenigstens eines Gegenstands implementieren, welches nachfolgend auch unter Bezugnahme auf Fig. 2 näher erläutert wird:
In dem ersten Schritt S1 des Verfahrens wird z. B. vermittels der Fertigungseinrichtung 2 ein Fertigungsprozess zur Fertigung des wenigstens einen Gegenstands durchgeführt. Der Fertigungsprozess umfasst wenigstens einen Fertigungsschritt. Der Fertigungsprozess kann je nach jeweilig herzustellendem Gegenstand z. B. wenigstens einen Urformprozess und/oder wenigstens einen Umformprozess und/oder wenigstens einen Fügeprozess und/oder wenigstens einen Trennprozess und/oder wenigstens einen Beschichtungsprozess und/oder wenigstens einen Stoffeigenschaftsänderungsprozess beinhalten. Ein entsprechender Fertigungsschritt kann sonach z. B. wenigstens einen Urformschritt und/oder wenigstens einen Umformschritt und/oder wenigstens einen Fügeschritt und/oder wenigstens einen Trennschritt und/oder wenigstens einen Beschichtungsschritt und/oder wenigstens einen Stoffeigenschaftsänderungsschritt beinhalten.

In einem zweiten Schritt S2 des Verfahrens wird wenigstens einem Fertigungsschritt des Fertigungsprozesses wenigstens eine die Fertigung des wenigstens einen Gegenstands betreffende Energieäquivalentinformation zugeordnet. Die wenigstens eine Energieäquivalentinformation beschreibt eine aus der zur Durchführung des wenigstens einen Fertigungsschritts erforderlichen Energiemenge ableitbare oder abgeleitete Energieäquivalentgröße. Eine entsprechende Energieäquivalentinformation beschreibt sonach fertigungsschrittspezifisch eine aus der zur Fertigung des wenigstens einen Gegenstands erforderlichen Energiemenge ableitbare oder abgeleitete Energieäquivalentgröße im Zusammenhang mit der Fertigung des wenigstens einen Gegenstands. Eine entsprechende Energieäquivalentgröße stellt typischerweise eine andere Größe als die Einheit der zur Fertigung des wenigstens einen Gegenstands erforderlichen Energiemenge, bei welcher es sich z. B. um Joule bzw. Kilojoule handelt, dar.

Der zweite Schritt S2 beinhaltet sonach typischerweise eine Analyse bzw. Auswertung des in dem ersten Schritt S1 durchzuführenden bzw. durchgeführten Fertigungsprozesses, d. h. wenigstens eines Fertigungsschritts des in dem ersten Schritt S1 durchzuführenden bzw. durchgeführten Fertigungsprozesses, im Hinblick auf die zur Fertigung des wenigstens einen Gegenstands unmittelbar oder mittelbar erforderliche Energiemenge und die Erzeugung einer Energieäquivalentinformation, welche eine aus der zur Fertigung des wenigstens einen Gegenstands fertigungsschrittspezifisch erforderlichen Energiemenge ableitbare oder abgeleitete Energieäquivalentgröße beschreibt. Eine entsprechende Energieäquivalentinformation kann sich sonach unmittelbar oder mittelbar auf die im Rahmen der Fertigung des wenigstens einen Gegenstands auf einzelne, mehrere oder sämtliche Fertigungsschritte (jeweilig) anfallende Energiemenge und somit fertigungsschrittspezifisch auch auf den jeweiligen Energieverbrauch beziehen. Eine entsprechende Energieäquivalentinformation kann sonach eine umfassende Beurteilung der im Rahmen der Fertigung des wenigstens einen Gegenstands auf einzelne, mehrere oder sämtliche Fertigungsschritte (jeweilig) anfallende Energiemengen und eine Art Normierung dieser über entsprechende Energieäquivalente ermöglichen.

Durch die fertigungsschrittspezifische Zuordnung einer entsprechenden Energieäquivalentinformation ist es sonach möglich, die im Rahmen der Fertigung des wenigstens einen Gegenstands in unterschiedlichen Fertigungsschritten jeweilig anfallenden und gegebenenfalls ihrer Energieform nach unterschiedlichen Energiemengen aussagekräftig und einfach zu bewerten sowie gegebenenfalls zu vergleichen, als für die jeweiligen Fertigungsschritte jeweils ihrer Einheit nach gleiche Energieäquivalente betrachtet werden können. Durch die mit einer entsprechenden Energieäquivalentinformation sonach in normierbaren bzw. normierten Energieäquivalentgrößen erfolgende Angabe der jeweiligen fertigungsschrittspezifisch erforderlichen Energiemengen über die aus diesen ableitbare bzw. abgeleitete Energieäquivalentgröße, wie z. B. das bereits erwähnte CO₂-Äquivalent, ist sonach eine sehr aussagekräftige und einfach automatisierbare Möglichkeit der Analyse und Bewertung eines Fertigungsprozesses im Hinblick auf einen aktuellen und/oder künftigen Energieverbrauch möglich.

Fig. 3 zeigt ein Flussdiagramm zur Veranschaulichung eines beispielhaften Fertigungsprozesses zur Fertigung wenigstens eines Gegenstands, im Rahmen dessen Durchführung das beschriebene Verfahren angewandt werden kann.

Der in Fig. 3 gezeigte Fertigungsprozess ist rein beispielhaft ein Schmiedeprozess zur Herstellung eines Pleuels als Beispiel für einen entsprechenden Gegenstand. Der Fertigungsprozess umfasst beispielsweise die sechs Fertigungsschritte FS1 - FS6, wobei der erste Fertigungsschritt FS1 ein über eine Schereinrichtung durchführbarer Scherschritt, der zweite Fertigungsschritt FS2 ein über eine Temperiereinrichtung durchführbarer Temperierschritt, der dritte Fertigungsschritt FS3 den über eine Schmiedeeinrichtung durchführbaren Schmiedeschritt, der vierte Fertigungsschritt FS4 einen über Abgrateinrichtung durchführbaren Abgratschritt, der fünfte Fertigungsschritt FS5 einen über eine Strahleinrichtung durchführbaren Strahlschritt und der sechste Fertigungsschritt FS6 einen über eine Prüfeinrichtung durchführbaren Prüfschritt beinhaltet. Wie erwähnt, sind die Fertigungsschritte FS1 - FS6 in Anzahl und Anordnung in dem Flussdiagramm rein beispielhaft gewählt.

Einzelnen, mehreren oder sämtlichen Fertigungsschritten FS1 - FS6 des Fertigungsprozesses kann verfahrensgemäß eine Energieäquivalentinformation zugeordnet werden, sodass zu jedem Fertigungsschritt FS1 - FS6 eine Energieäquivalentgröße vorliegt, welche die im Rahmen des jeweiligen Fertigungsschritts FS1 - FS6 anfallende Energiemenge abbildet.

Eine entsprechende vermittels einer Energieäquivalentinformation, gegebenenfalls einfach automatisierbar, mögliche Analyse und Bewertung eines Fertigungsprozesses, wie z. B. des in Fig. 3 gezeigten Fertigungsprozesses, kann, wie sich im Weiteren ergibt, die Grundlage für eine, gegebenenfalls steuerungs- und/oder regelungstechnische, Änderung bzw. Anpassung wenigstens eines Fertigungsschritts, insbesondere wenigstens eines fertigungsschrittspezifischen Fertigungsprozessparameters und/oder eines Materialparameters, des jeweiligen Fertigungsprozesses bilden. Eine entsprechende Änderung bzw. Anpassung erfolgt typischerweise im Hinblick auf wenigstens ein Zielkriterium, welches z. B. eine Reduzierung der insgesamt zur Fertigung des wenigstens einen Gegenstands erforderlichen Energiemenge betreffen kann.

Zur Erzeugung einer entsprechenden Energieäquivalentinformation kann die im Rahmen der Fertigung des wenigstens einen Gegenstands für einzelne, mehrere oder sämtliche Fertigungsschritte (jeweilige) anfallende Energiemenge, z. B. durch Messungen, Untersuchungen, Simulationen oder durch Umwandlung anderer im Zusammenhang mit dem Fertigungsprozess erfasster Größen, wie insbesondere fertigungsprozessbezogener Kosten, bestimmt bzw. ermittelt werden und die derart, insbesondere fertigungsschrittspezifisch, bestimmten bzw. ermittelten Energiemengen in eine entsprechende Energieäquivalentgröße, wie z. B. in ein CO₂-Äquivalent, umgerechnet werden.

Die vermittels der Datenverarbeitungseinrichtung 3 erfolgende Erzeugung einer entsprechenden Energieäquivalentinformation kann computerimplementiert, d. h. insbesondere mittels geeigneter Algorithmen, erfolgen, welche eingerichtet sind, aus Daten bzw. Informationen, welche die zur Fertigung des wenigstens einen Gegenstands fertigungsschrittspezifisch erforderliche Energiemenge betreffen, Energieäquivalentgrößen abzuleiten. Entsprechende Energieäquivalentinformationen können auf Grundlage entsprechender Energieäquivalentgrößen, wie z. B. CO₂-Äquivalente, erzeugt werden.

Selbstverständlich kann die Bestimmung bzw. Ermittlung der im Rahmen jeweiliger Fertigungsschritte jeweilig anfallender Energiemengen auch prognostisch bzw. simulativ erfolgen; mithin kann eine Energieäquivalentinformation nicht nur eine Energieäquivalentgröße beschreiben, welche sich auf eine (jeweilige) aktuelle Energiemenge einzelner, mehrerer oder sämtlicher Fertigungsschritte im Rahmen der Fertigung des wenigstens einen Gegenstands bezieht. Alternativ oder ergänzend kann eine Energieäquivalentinformation sonach eine Energieäquivalentgröße beschreiben, welche sich auf eine (jeweilige) künftige Energiemenge einzelner, mehrerer oder sämtlicher Fertigungsschritte im Rahmen der Fertigung des wenigstens einen Gegenstands bezieht. Eine entsprechende künftige Energiemenge einzelner, mehrerer oder sämtlicher Fertigungsschritte im Rahmen der Fertigung des wenigstens einen Gegenstands kann z. B. durch Prognosen bzw. Simulationen bestimmt bzw. ermittelt werden.

Wie erwähnt, kann ein im Rahmen des ersten Schritts S1 des Verfahrens durchgeführter Fertigungsprozess mehrere Fertigungsschritte umfassen. Verfahrensgemäß ist es möglich, dass jedem Fertigungsschritt eine (eigene) Energieäquivalentinformation zugeordnet wird. Mithin ist es möglich, dass ein Fertigungsprozess durch die jeweiligen Fertigungsschritten zugeordneten Energieäquivalentinformationen im Hinblick auf die den für die jeweiligen Fertigungsschritte erforderlichen Energiemengen entsprechenden Energieäquivalente fertigungsschrittspezifisch aufgelöst analysiert und bewertet werden. Derart lassen sich sehr aussagekräftige Vergleiche der Energieverbräuche der jeweiligen Fertigungsschritte anstellen sowie Fertigungsschritte identifizieren, welche die insgesamt zur Fertigung eines jeweiligen Gegenstands erforderliche Energiemenge erheblich beeinflussen.

Eine entsprechende Energieäquivalentinformation kann in allen Fällen bezogen auf wenigstens einen Fertigungsschritt einen Energieäquivalentanteil wenigstens eines Fertigungsprozessparameters und/oder Materialparameters beinhalten. Jeder Fertigungsschritt kann sonach in wenigstens einen Fertigungsprozessparameter und/oder in wenigstens einen Materialparameter aufgeteilt werden. Ein Fertigungsprozessparameter beinhaltet typischerweise einzelne, mehrere oder sämtliche sich unmittelbar oder mittelbar auf die zur Durchführung des jeweiligen Fertigungsschritts im Rahmen der Fertigung des wenigstens einen Gegenstands erforderliche Energiemenge fertigungsprozessbedingt auswirkenden Parameter. Hierzu zählen insbesondere Anlagen- und/oder Betriebsparameter einer zur Durchführung des jeweiligen Fertigungsschritts verwendeten Fertigungseinrichtung 2. Ein Materialparameter beinhaltet typischerweise einzelne, mehrere oder sämtliche sich unmittelbar oder mittelbar auf die zur Durchführung des jeweiligen Fertigungsschritts im Rahmen der Fertigung des wenigstens einen Gegenstands erforderliche Energiemenge materialbedingt auswirkenden Parameter. Hierzu zählen insbesondere chemische und/oder physikalische Parameter eines zur Durchführung des jeweiligen Fertigungsschritts verwendeten, d. h. insbesondere zu verarbeitenden bzw. verarbeiteten, Materials.

Ein Fertigungsprozessparameter kann sonach z. B. eine zur Fertigung des wenigstens einen Gegenstands verwendete Fertigungsumgebung, insbesondere wenigstens eine zur Fertigung des wenigstens einen Gegenstands verwendete Fertigungseinrichtung 2 bzw. -maschine und/oder wenigstens ein zur Fertigung des wenigstens einen Gegenstands verwendetes Fertigungswerkzeug, betreffen.

Alternativ oder ergänzend kann ein Fertigungsprozessparameter z. B. die Verpackung des wenigstens einen Gegenstands vor und/oder während und/oder nach einem jeweiligen Fertigungsschritt betreffen. Mithin kann auch die Verpackung des wenigstens einen Gegenstands in die zur Durchführung eines jeweiligen Fertigungsschritts bzw. Fertigungsprozesses erforderliche Energiemenge und somit in eine entsprechende Energieäquivalentinformation eingehen.

Alternativ oder ergänzend kann ein Fertigungsprozessparameter z. B. den Transport des wenigstens einen Gegentands vor und/oder während und/oder nach einem jeweiligen Fertigungsschritt betreffen. Mithin kann auch der Transport des wenigstens einen Gegenstands in die zur Durchführung eines jeweiligen Fertigungsschritts bzw. Fertigungsprozesses erforderliche Energiemenge und somit in eine entsprechende Energieäquivalentinformation eingehen.

Alternativ oder ergänzend kann ein Fertigungsprozessprozessparameter einen Fertigungsstandort, insbesondere innerhalb einer Fertigungsanlage, wie z. B. einer Fabrik und/oder zwischen unterschiedlichen Fertigungsanlagen, wie z. B. unterschiedlichen Fabriken, des wenigstens einen Gegenstands betreffen. Mithin kann auch ein aktueller oder künftiger Fertigungsstandort in die zur Durchführung eines jeweiligen Fertigungsschritts bzw. Fertigungsprozesses erforderliche Energiemenge und somit in eine entsprechende Energieäquivalentinformation eingehen.

Alternativ oder ergänzend kann ein Fertigungsprozessprozessparameter eine Fertigungszeit, insbesondere eine Tages-, Monats- oder Jahreszeit, des wenigstens einen Gegenstands betreffen. Mithin kann auch eine aktuelle oder künftige Fertigungszeit in die zur Durchführung eines jeweiligen Fertigungsschritts bzw. Fertigungsprozesses erforderliche Energiemenge und somit in eine entsprechende Energieäquivalentinformation eingehen.

Alternativ oder ergänzend kann ein Fertigungsprozessparameter das zur Fertigung des wenigstens einen Gegenstands unmittelbar oder mittelbar eingesetzte Personal betreffen. Mithin können auch Parameter eines aktuellen oder künftigen Personals in die zur Durchführung eines jeweiligen Fertigungsschritts bzw. Fertigungsprozesses erforderliche Energiemenge und somit in eine entsprechende Energieäquivalentinformation eingehen. Entsprechende Parameter können den Energieverbrauch des Personals - hierbei kann es sich sowohl um Fertigungspersonal, wie z. B. um Werkerpersonal, als auch um Verwaltungspersonal, wie z. B. um Logistik- oder Vertriebspersonal, handeln - im Rahmen von mittelbar oder unmittelbar im Zusammenhang mit der Fertigung des wenigstens einen Gegenstands stehenden Tätigkeiten, wie z. B. der Bedienung oder Einstellung von Fertigungseinrichtungen 2 bzw. -maschinen, oder im Rahmen von nicht mittelbar oder unmittelbar im Zusammenhang mit der Fertigung des wenigstens Gegenstands stehenden Tätigkeiten, wie z. B. dem Arbeitsweg, dem Besuch von Kantinen, sanitären Einrichtungen, etc., oder entsprechenden Erfordernissen, wie z. B. Klimatisierung und/oder Temperierung der Arbeits- oder Betriebsräume, betreffen. Der Energieverbrauch des Personals kann sonach umfassend berücksichtigt werden und in eine entsprechende Energieäquivalentinformation eingehen.

Ein Materialparameter kann sonach z. B. ein zur Fertigung des wenigstens einen Gegenstands verwendbares oder verwendetes Material betreffen. Mithin kann das im Rahmen der Durchführung wenigstens eines Fertigungsschritts verwendete Material in die zur Durchführung des jeweiligen Fertigungsschritts bzw. Fertigungsprozesses erforderliche Energiemenge und somit in eine entsprechende Energieäquivalentinformation eingehen.

Alternativ oder ergänzend kann ein Materialparameter z. B. die Verpackung des Materials vor und/oder während und/oder nach einem jeweiligen Fertigungsschritt betreffen. Mithin kann auch die Verpackung eines Materials in die zur Durchführung eines jeweiligen Fertigungsschritts bzw. Fertigungsprozesses erforderliche Energiemenge und somit in eine entsprechende Energieäquivalentinformation eingehen.

Alternativ oder ergänzend kann ein Materialparameter z. B. den Transport des Materials vor und/oder während und/oder nach einem jeweiligen Fertigungsschritt betreffen. Mithin kann auch der Transport eines Materials in die zur Durchführung eines jeweiligen Fertigungsschritts bzw. Fertigungsprozesses erforderliche Energiemenge und somit in eine entsprechende Energieäquivalentinformation eingehen.

Fertigungsprozessparameter und/oder Materialparameter umfassen sonach grundsätzlich sämtliche Parameter einer zentralen oder dezentralen Fertigungsinfrastruktur, welche den Energieverbrauch bei der Fertigung eines jeweiligen Gegenstands direkt oder indirekt beeinflussen. Angesprochen sind neben den eigentlichen Fertigungsstrukturen, d. h. insbesondere den eingesetzten Fertigungseinrichtungen bzw. -maschinen, auch sonstige sich auf die Energiebilanz der Fertigung des wenigstens einen Gegenstands beziehbare Strukturen. Hierzu zählen z. B. Vertriebsstrukturen, insbesondere im Zusammenhang mit dem Einkauf, der Verpackung und/oder dem Transport von zur Fertigung eines jeweiligen Gegenstands erforderlichen Materialien, und/oder im Zusammenhang mit dem Verkauf, der Verpackung und/oder dem Transport von gefertigten Gegenständen, Verwaltungsstrukturen, insbesondere im Zusammenhang mit der Verwaltung der Fertigung und/oder des Vertriebs des jeweiligen Gegenstands, oder sonstige Personalstrukturen sein. Auch sonstige Ressourcen, wie z. B. unmittelbar oder mittelbar im Zusammenhang mit der Fertigung eines jeweiligen Gegenstands stehende Energie- oder Personalressourcen, im Allgemeinen auf einen jeweiligen Fertigungsprozess beziehbare Einzel- oder Gemeinkosten jeder Art, können dem Grunde nach berücksichtigt werden.

Das Verfahren kann in einem optionalen Schritt S3 ein, gegebenenfalls automatisierbares bzw. automatisiertes, Vorgeben einer einen Sollenergieverbrauch der Fertigung des wenigstens einen Gegenstands betreffenden Sollinformation, ein Vergleichen des durch die Energieäquivalentinformation beschriebenen Energieverbrauchs mit dem durch die Sollinformation beschriebenen Sollenergieverbrauch, und Erzeugen einer das Vergleichsergebnis beschreibenden Vergleichsinformation umfassen. Das Vorgeben einer einen Sollenergieverbrauch der Fertigung des wenigstens einen Gegenstands betreffenden Sollinformation, das Vergleichen des durch die Energieäquivalentinformation beschriebenen Energieverbrauchs mit dem durch die Sollinformation beschriebenen Sollenergieverbrauch, und das Erzeugen einer das Vergleichsergebnis beschreibenden Vergleichsinformation können jeweils computerimplementiert, d. h. insbesondere vermittels einer oder mehreren hardware- und/oder softwaremäßig implementierten Einrichtungen, d. h. insbesondere der Datenverarbeitungseinrichtung 3, durchgeführt werden. Die Datenverarbeitungseinrichtung 3 kann hierzu über geeignete Vorgabe- und Vergleichsalgorithmen verfügen. Entsprechende Vorgabe- und Vergleichsalgorithmen können durch künstliche neuronale Netze, d. h. im Allgemeinen durch Prinzipien des maschinellen Lernens bzw. der künstlichen Intelligenz, implementiert werden.

Das Verfahren kann in entsprechenden Ausführungsformen in einem weiteren optionalen Schritt S4 ferner ein, gegebenenfalls automatisierbares bzw. automatisiertes, Vorschlagen einer Änderung bzw. Anpassung wenigstens eines Fertigungsprozessparameters und/oder Materialparameters des Fertigungsprozesses beinhalten, wenn ein vordefinierbarer oder vordefinierter Abweichungsgrenzwert über- oder unterschritten wird (oder droht, über- oder unterschritten zu werden), insbesondere derart, dass der vordefinierbare oder vordefinierte Abweichungsgrenzwert bei Vornahme der vorgeschlagenen Änderung bzw. Anpassung nicht mehr über- oder unterschritten wird. Das Vorschlagen einer Änderung wenigstens eines Fertigungsprozessparameters und/oder Materialparameters des Fertigungsprozesses kann ebenso computerimplementiert, d. h. insbesondere vermittels einer oder mehreren hardware- und/oder softwaremäßig implementierten Einrichtungen, d. h. insbesondere der Datenverarbeitungseinrichtung 3, durchgeführt werden. Die Datenverarbeitungseinrichtung 3 kann hierzu über geeignete Vorschlagsalgorithmen verfügen. Entsprechende Vorschlagsalgorithmen können durch künstliche neuronale Netze, d. h. im Allgemeinen durch Prinzipien des maschinellen Lernens bzw. der künstlichen Intelligenz, implementiert werden.

Das Verfahren kann in entsprechenden Ausführungsformen in einem weiteren optionalen Schritt S5 ferner ein, gegebenenfalls automatisierbares bzw. automatisiertes, Ändern bzw. Anpassen wenigstens eines Fertigungsprozessparameters und/oder Materialparameters des Fertigungsprozesses beinhalten, wenn eine entsprechende Vergleichsinformation angibt, dass ein vordefinierbarer oder vordefinierter Abweichungsgrenzwert über- oder unterschritten ist, insbesondere derart, dass der vordefinierbare oder vordefinierte Abweichungsgrenzwert nicht mehr über- oder unterschritten wird. Die Änderung bzw. Anpassung wenigstens eines Fertigungsprozessparameters und/oder Materialparameters des Fertigungsprozesses kann unter Berücksichtigung eines entsprechenden Vorschlags erfolgen. Das Ändern bzw. Anpassen wenigstens eines Fertigungsprozessparameters und/oder Materialparameters des Fertigungsprozesses kann ebenso computerimplementiert, d. h. insbesondere vermittels einer oder mehreren hardware- und/oder softwaremäßig implementierten Einrichtungen, d. h. insbesondere der Datenverarbeitungseinrichtung 3, durchgeführt werden. Die Datenverarbeitungseinrichtung 3 kann hierzu über geeignete Änderungs- bzw. Anpassungsalgorithmen verfügen. Entsprechende Änderungs- bzw. Anpassungsalgorithmen können durch künstliche neuronale Netze, d. h. im Allgemeinen durch Prinzipien des maschinellen Lernens bzw. der künstlichen Intelligenz, implementiert werden.

Aus vorstehenden Ausführungen ergibt sich, dass das Verfahren, gegebenenfalls in Echtzeit, auch eine Steuerung bzw. Regelung, d. h. insbesondere auch Optimierung, eines vermittels der bzw. einer Fertigungseinrichtung 2, 2' durchführbaren bzw. durchgeführten Fertigungsprozesses zur Fertigung wenigstens eines Gegenstands, insbesondere durch entsprechende Änderung bzw. Anpassung von Fertigungsprozessparametern und/oder Materialparametern, beinhalten kann.

Es wurde erwähnt, dass zur Erzeugung einer entsprechenden Energieäquivalentinformation die im Rahmen der Fertigung des wenigstens einen Gegenstands für einzelne, mehrere oder sämtliche Fertigungsschritte (jeweilige) anfallende Energiemenge, z. B. durch Messungen, Untersuchungen, Simulationen oder durch Umwandlung anderer im Zusammenhang mit dem Fertigungsprozess erfasster Größen, wie insbesondere fertigungsprozessbezogener Kosten, bestimmt bzw. ermittelt werden und die derart, insbesondere fertigungsschrittspezifisch, bestimmten bzw. ermittelten Energiemengen in eine entsprechende Energieäquivalentgröße, wie z. B. in ein CO₂-Äquivalent, umgerechnet werden können. Eine Energieäquivalentinformation kann sonach grundsätzlich anhand bzw. auf Grundlage von den Energieverbrauch der zur Fertigung des wenigstens einen Gegenstands erforderlichen Energiemenge betreffenden Messungen oder Untersuchungen oder anhand bzw. auf Grundlage von den Energieverbrauch der zur Fertigung des wenigstens einen Gegenstands erforderlichen Energiemenge betreffenden Simulationen erzeugt werden.

Zweckmäßig wird eine entsprechende Energieäquivalentinformation jedoch anhand bzw. auf Grundlage von die Fertigung des wenigstens einen Gegenstands betreffenden Kosteninformationen erzeugt. Dieser besonders effiziente Ansatz zu Erzeugung einer entsprechenden Energieäquivalentinformation beruht auf der Idee, bereits vorliegende Informationen zu, gegebenenfalls detailliert, z. B. nach Fertigungsprozessparametern und/oder Materialparametern, aufgeschlüsselten, Kosten zur Erzeugung entsprechender Energieäquivalentinformation zu nutzen. Entsprechende Kosteninformationen können sonach computerimplementiert, d. h. z. B. über geeignete Algorithmen, dahingehend verarbeitet werden, um aus diesen Energieäquivalente und sonach Energieäquivalentinformationen abzuleiten. Der rechnerische Aufwand zur Erzeugung entsprechender Energieäquivalentinformationen kann derart gegebenenfalls erheblich reduziert werden, als auf bereits vorliegende Informationen, d. h. entsprechende Kosteninformationen, zurückgegriffen werden kann.

Das Verfahren kann in allen Ausführungsformen ferner ein Bereitstellen einer hardware- und/oder softwaremäßig implementierten Datenbankstruktur und ein, insbesondere nutzerseitiges, Anreichern dieser mit individuellen Informationen zur Erzeugung der wenigstens einen Energieäquivalentinformation beinhalten. Mithin können die der Erzeugung einer entsprechender Energieäquivalentinformation zugrundeliegenden Daten bzw. Informationen stetig erweitert werden, was zu noch aussagekräftigeren und exakteren Energieäquivalentinformationen führen kann.

Die Datenverarbeitungseinrichtung 3 kann ferner eingerichtet sein, ein Verfahren zur Bewertung des Energieverbrauchs eines Fertigungsprozesses wenigstens eines Gegenstands anhand einer Energieäquivalentinformation zu implementieren. Das Verfahren kann die folgenden Schritte umfassen:
- Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße, wie z. B. ein CO₂-Äquivalent, im Zusammenhang mit der Durchführung des wenigstens einen Fertigungsschritts beschreibt, zu wenigstens einem Fertigungsschritt des Fertigungsprozesses;
- Bewerten der Energieäquivalentinformation im Hinblick auf wenigstens ein Bewertungskriterium; und
- Erzeugen einer ein Bewertungsergebnis beschreibenden Bewertungsinformation.

Die Datenverarbeitungseinrichtung 3 kann sonach ein Computerprogrammprodukt umfassen, welches Befehle zum Zuordnen wenigstens einer die Fertigung des wenigstens einen Gegenstands betreffenden Energieäquivalentinformation zu wenigstens einem Fertigungsschritt wenigstens eines Fertigungsprozesses zum Fertigen wenigstens eines Gegenstands, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Fertigung des wenigstens einen Gegenstands beschreibt, umfasst.

Ein entsprechendes Computerprogrammprodukt kann auf einem computerlesbaren Datenträger gespeichert sein.

Einzelne Merkmale der Erfindung sind in den nachfolgenden Aspekten definiert:
1. Verfahren zur Fertigung wenigstens eines Gegenstands, umfassend die Schritte:
   - Durchführen eines wenigstens einen Fertigungsschritt umfassenden Fertigungsprozesses zur Fertigung des wenigstens einen Gegenstands,
   - Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt.
2. Verfahren nach Aspekt 1, wobei der Fertigungsprozess mehrere Fertigungsschritte umfasst, wobei jedem Fertigungsschritt eine Energieäquivalentinformation zugeordnet wird.
3. Verfahren nach Aspekt 1 oder 2, wobei die Energieäquivalentinformation einen Energieäquivalentanteil wenigstens eines Fertigungsprozess- und/oder Materialparameters wenigstens eines Fertigungsschritts des Fertigungsprozesses beinhaltet.
4. Verfahren nach Aspekt 3, wobei der Fertigungsprozessparameter Fertigungsprozessparameter eine zur Fertigung des wenigstens einen Gegenstands verwendete Fertigungsumgebung, insbesondere wenigstens eine zur Fertigung des wenigstens einen Gegenstands verwendete Fertigungseinrichtung (2) bzw. -maschine und/oder wenigstens ein zur Fertigung des wenigstens einen Gegenstands verwendetes Fertigungswerkzeug, betrifft; und/oder
   die Verpackung des wenigstens einen Gegenstands, insbesondere vor und/oder während und/oder nach einem jeweiligen Fertigungsschritt, betrifft; und/oder den Transport des wenigstens einen Gegentands, insbesondere vor und/oder während und/oder nach einem jeweiligen Fertigungsschritt, betrifft; und/oder
   einen Fertigungsstandort des wenigstens einen Gegenstands betrifft;
   eine Fertigungszeit, insbesondere eine Tages-, Monats- oder Jahreszeit, des wenigstens einen Gegenstands betrifft; und/oder
   das zur Fertigung des wenigstens einen Gegenstands unmittelbar oder mittelbar eingesetzte Personal betrifft;
5. Verfahren nach Aspekt3 oder 4, wobei der Materialparameter ein zur Fertigung des wenigstens einen Gegenstands verwendbares oder verwendetes Material betrifft; und/oder
   den Transport eines zur Fertigung des wenigstens einen Gegenstands verwendbaren oder verwendeten Materials, insbesondere vor und/oder während und/oder nach einem jeweiligen Fertigungsschritt, betrifft; und/oder
   die Verpackung eines zur Fertigung des wenigstens einen Gegenstands verwendbaren oder verwendeten Materials, insbesondere eines vor und/oder während und/oder nach einem jeweiligen Fertigungsschritt, betrifft.
6. Verfahren nach einem der vorhergehenden Aspekte, umfassend Vorgeben einer einen Sollenergieverbrauch der Fertigung des wenigstens einen Gegenstands betreffenden Sollinformation, Vergleichen des durch die Energieäquivalentinformation beschriebenen Energieverbrauchs mit dem durch die Sollinformation beschriebenen Sollenergieverbrauch, und Erzeugen einer das Vergleichsergebnis beschreibenden Vergleichsinformation.
7. Verfahren nach einem der vorhergehenden Aspekte, umfassend Vorschlagen einer Änderung wenigstens eines Fertigungsprozess- und/oder Materialparameters des Fertigungsprozesses, wenn ein vordefinierbarer oder vordefinierter Abweichungsgrenzwert über- oder unterschritten ist, insbesondere derart, dass der vordefinierbare oder vordefinierte Abweichungsgrenzwert bei Vornahme der vorgeschlagenen Änderung nicht mehr über- oder unterschritten wird.
8. Verfahren nach einem der vorhergehenden Aspekte, umfassend Ändern wenigstens eines Fertigungsprozess- und/oder Materialparameters des Fertigungsprozesses, wenn die Vergleichsinformation angibt, dass ein vordefinierbarer oder vordefinierter Abweichungsgrenzwert über- oder unterschritten ist, insbesondere derart, dass der vordefinierbare oder vordefinierte Abweichungsgrenzwert nicht mehr über- oder unterschritten wird.
9. Verfahren nach einem der vorhergehenden Aspekte, umfassend Ausgeben der Energieäquivalentinformation an wenigstens einem oder über wenigstens ein Ausgabeelement.
10. Verfahren nach Aspekt 9, wobei das Ausgeben ein Ausgeben der Energieäquivalentinformation an einem Ausgabeelement, insbesondere einem Display, einer Ausgabeeinrichtung, und/oder ein Übertragen der Energieäquivalentinformation an einen externen Kommunikationspartner beinhaltet.
11. Verfahren nach einem der vorhergehenden Aspekte, wobei die Energieäquivalentinformation anhand von den Energieverbrauch der zur Fertigung des wenigstens einen Gegenstands erforderlichen Energiemenge betreffenden Messungen oder Untersuchungen oder anhand von den Energieverbrauch der zur Fertigung des wenigstens einen Gegenstands erforderlichen Energiemenge betreffenden Simulationen erzeugt wird.
12. Verfahren nach einem der vorhergehenden Aspekte, wobei die Energieäquivalentinformation anhand von die Fertigung des wenigstens einen Gegenstands betreffenden Kosteninformationen erzeugt wird.
13. Verfahren nach einem der vorhergehenden Aspekte, umfassend Bereitstellen einer Datenbankstruktur und, insbesondere nutzerseitiges, Anreichern dieser mit individuellen Informationen zur Erzeugung der wenigstens einen Energieäquivalentinformation.
14. Verfahren nach einem der vorhergehenden Aspekte, wobei die Energieäquivalentinformation ein CO₂-Äquivalent beschreibt.
15. Verfahren nach einem der vorhergehenden Ansprüche, wobei der Fertigungsprozess wenigstens einen Urformprozess und/oder wenigstens einen Umformprozess und/oder wenigstens einen Fügeprozess und/oder wenigstens einen Trennprozess und/oder wenigstens einen Beschichtungsprozess und/oder wenigstens einen Stoffeigenschaftsänderungsprozess beinhaltet.
16. Verfahren nach einem der vorhergehenden Aspekte, wobei ein Gegenstand für ein Fahrzeug, insbesondere für ein Land-, Luft- oder Wasserfahrzeug, gefertigt wird.
17. Verfahren zur Bewertung des Energieverbrauchs eines Fertigungsprozesses wenigstens eines Gegenstands anhand einer Energieäquivalentinformation, umfassend:
   - Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt, zu wenigstens einem Fertigungsschritt des Fertigungsprozesses;
   - Bewerten der Energieäquivalentinformation im Hinblick auf wenigstens ein Bewertungskriterium; und
   - Erzeugen einer ein Bewertungsergebnis beschreibenden Bewertungsinformation.
18. Verfahren nach Aspekt 17, umfassend Steuern oder Regeln wenigstens eines Fertigungsprozess- oder Materialparameters wenigstens eines Fertigungsschritts auf Grundlage der Bewertungsinformation.
19. System (1) zur Fertigung wenigstens eines Gegenstands, umfassend:
   - wenigstens eine Fertigungseinrichtung (2, 2'), welche zum Durchführen eines wenigstens einen Fertigungsschritt umfassenden Fertigungsprozesses zur Fertigung des wenigstens einen Gegenstands eingerichtet ist,
   - wenigstens eine Datenverarbeitungseinrichtung (3), welche zum Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt, eingerichtet ist.
20. System (1) zur Bewertung des Energieverbrauchs eines Fertigungsprozesses wenigstens eines Gegenstands anhand einer Energieäquivalentinformation, umfassend eine Datenverarbeitungseinrichtung (3), welche zum
   - Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt, zu wenigstens einem Fertigungsschritt eines Fertigungsprozesses eingerichtet ist; und
   - zum Bewerten der Energieäquivalentinformation im Hinblick auf wenigstens ein Bewertungskriterium und Erzeugen einer ein Bewertungsergebnis beschreibenden Bewertungsinformation eingerichtet ist.
21. Computerprogrammprodukt für eine Datenverarbeitungseinrichtung (3) eines Systems (1) nach Aspekt 19 oder 20, umfassend Befehle zum Zuordnen wenigstens einer die Fertigung des wenigstens einen Gegenstands betreffenden Energieäquivalentinformation zu wenigstens einem Fertigungsschritt eines Fertigungsprozesses zum Fertigen wenigstens eines Gegenstands, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Fertigung des wenigstens einen Gegenstands beschreibt.
22. Computerlesbarer Datenträger, auf dem das Computerprogrammprodukt nach Aspekt 21 gespeichert ist.

## Patentansprüche

1. Verfahren zur Fertigung wenigstens eines Gegenstands, insbesondere eines Gegenstands für ein Fahrzeug, insbesondere für ein Land-, Luft- oder Wasserfahrzeug, umfassend die Schritte:
- Durchführen eines wenigstens einen Fertigungsschritt umfassenden Fertigungsprozesses zur Fertigung des wenigstens einen Gegenstands,
- Zuordnen wenigstens einer die Fertigung des wenigstens einen Gegenstands betreffenden Energieäquivalentinformation, wobei die Energieäquivalentinformation insbesondere ein CO₂-Äquivalent beschreibt, zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt.

2. Verfahren nach Anspruch 1, **dadurch gekennzeichnet, dass** der Fertigungsprozess mehrere Fertigungsschritte umfasst, wobei jedem Fertigungsschritt eine Energieäquivalentinformation zugeordnet wird.

3. Verfahren nach Anspruch 1 oder 2, **dadurch gekennzeichnet, dass** die Energieäquivalentinformation einen Energieäquivalentanteil wenigstens eines Fertigungsprozess- und/oder Materialparameters wenigstens eines Fertigungsschritts des Fertigungsprozesses beinhaltet.

4. Verfahren nach Anspruch 3, **dadurch gekennzeichnet, dass** der Fertigungsprozessparameter
Fertigungsprozessparameter eine zur Fertigung des wenigstens einen Gegenstands verwendete Fertigungsumgebung, insbesondere wenigstens eine zur Fertigung des wenigstens einen Gegenstands verwendete Fertigungseinrichtung (2) bzw. -maschine und/oder wenigstens ein zur Fertigung des wenigstens einen Gegenstands verwendetes Fertigungswerkzeug, betrifft; und/oder
die Verpackung des wenigstens einen Gegenstands, insbesondere vor und/oder während und/oder nach einem jeweiligen Fertigungsschritt, betrifft; und/oder den Transport des wenigstens einen Gegentands, insbesondere vor und/oder während und/oder nach einem jeweiligen Fertigungsschritt, betrifft; und/oder
einen Fertigungsstandort des wenigstens einen Gegenstands betrifft;
eine Fertigungszeit, insbesondere eine Tages-, Monats- oder Jahreszeit, des wenigstens einen Gegenstands betrifft; und/oder
das zur Fertigung des wenigstens einen Gegenstands unmittelbar oder mittelbar eingesetzte Personal betrifft;

5. Verfahren nach Anspruch 3 oder 4, **dadurch gekennzeichnet, dass** der Materialparameter
ein zur Fertigung des wenigstens einen Gegenstands verwendbares oder verwendetes Material betrifft; und/oder
den Transport eines zur Fertigung des wenigstens einen Gegenstands verwendbaren oder verwendeten Materials, insbesondere vor und/oder während und/oder nach einem jeweiligen Fertigungsschritt, betrifft; und/oder
die Verpackung eines zur Fertigung des wenigstens einen Gegenstands verwendbaren oder verwendeten Materials, insbesondere eines vor und/oder während und/oder nach einem jeweiligen Fertigungsschritt, betrifft.

6. Verfahren nach einem der vorhergehenden Ansprüche, **gekennzeichnet durch** Vorgeben einer einen Sollenergieverbrauch der Fertigung des wenigstens einen Gegenstands betreffenden Sollinformation, Vergleichen des durch die Energieäquivalentinformation beschriebenen Energieverbrauchs mit dem durch die Sollinformation beschriebenen Sollenergieverbrauch, und Erzeugen einer das Vergleichsergebnis beschreibenden Vergleichsinformation.

7. Verfahren nach einem der vorhergehenden Ansprüche, **gekennzeichnet durch** Vorschlagen einer Änderung wenigstens eines Fertigungsprozess- und/oder Materialparameters des Fertigungsprozesses, wenn ein vordefinierbarer oder vordefinierter Abweichungsgrenzwert über- oder unterschritten ist, insbesondere derart, dass der vordefinierbare oder vordefinierte Abweichungsgrenzwert bei Vornahme der vorgeschlagenen Änderung nicht mehr über- oder unterschritten wird.

8. Verfahren nach einem der vorhergehenden Ansprüche, **gekennzeichnet durch** Ändern wenigstens eines Fertigungsprozess- und/oder Materialparameters des Fertigungsprozesses, wenn die Vergleichsinformation angibt, dass ein vordefinierbarer oder vordefinierter Abweichungsgrenzwert über- oder unterschritten ist, insbesondere derart, dass der vordefinierbare oder vordefinierte Abweichungsgrenzwert nicht mehr über- oder unterschritten wird.

9. Verfahren nach einem der vorhergehenden Ansprüche, **dadurch gekennzeichnet, dass** die Energieäquivalentinformation anhand von den Energieverbrauch der zur Fertigung des wenigstens einen Gegenstands erforderlichen Energiemenge betreffenden Messungen oder Untersuchungen oder anhand von den Energieverbrauch der zur Fertigung des wenigstens einen Gegenstands erforderlichen Energiemenge betreffenden Simulationen erzeugt wird.

10. Verfahren nach einem der vorhergehenden Ansprüche, **dadurch gekennzeichnet, dass** die Energieäquivalentinformation anhand von die Fertigung des wenigstens einen Gegenstands betreffenden Kosteninformationen erzeugt wird.

11. Verfahren nach einem der vorhergehenden Ansprüche, **gekennzeichnet durch** Bereitstellen einer Datenbankstruktur und, insbesondere nutzerseitiges, Anreichern dieser mit individuellen Informationen zur Erzeugung der wenigstens einen Energieäquivalentinformation.

12. Verfahren nach einem der vorhergehenden Ansprüche, **dadurch gekennzeichnet, dass** der Fertigungsprozess wenigstens einen Urformprozess und/oder wenigstens einen Umformprozess und/oder wenigstens einen Fügeprozess und/oder wenigstens einen Trennprozess und/oder wenigstens einen Beschichtungsprozess und/oder wenigstens einen Stoffeigenschaftsänderungsprozess beinhaltet.

13. Verfahren zur Bewertung des Energieverbrauchs eines Fertigungsprozesses wenigstens eines Gegenstands anhand einer Energieäquivalentinformation, **gekennzeichnet durch:**
- Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt, zu wenigstens einem Fertigungsschritt des Fertigungsprozesses;
- Bewerten der Energieäquivalentinformation im Hinblick auf wenigstens ein Bewertungskriterium; und
- Erzeugen einer ein Bewertungsergebnis beschreibenden Bewertungsinformation; optional ferner umfassend Steuern oder Regeln wenigstens eines Fertigungsprozess- oder Materialparameters wenigstens eines Fertigungsschritts auf Grundlage der Bewertungsinformation.

14. System (1) zur Fertigung wenigstens eines Gegenstands, umfassend:
- wenigstens eine Fertigungseinrichtung (2, 2'), welche zum Durchführen eines wenigstens einen Fertigungsschritt umfassenden Fertigungsprozesses zur Fertigung des wenigstens einen Gegenstands eingerichtet ist,
- wenigstens eine Datenverarbeitungseinrichtung (3), welche zum Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt, eingerichtet ist.

15. System (1) zur Bewertung des Energieverbrauchs eines Fertigungsprozesses wenigstens eines Gegenstands anhand einer Energieäquivalentinformation, umfassend eine Datenverarbeitungseinrichtung (3), welche zum
- Zuordnen wenigstens einer die Fertigung des wenigstens einen Gegenstands betreffenden Energieäquivalentinformation zu wenigstens einem Fertigungsschritt des Fertigungsprozesses, wobei die wenigstens eine Energieäquivalentinformation eine aus der zur Fertigung des wenigstens einen Gegenstands erforderlichen Energiemenge ableitbare oder abgeleitete Energieäquivalentgröße im Zusammenhang mit der Durchführung des wenigstens einen Fertigungsschritts beschreibt, zu wenigstens einem Fertigungsschritt eines Fertigungsprozesses eingerichtet ist; und
- zum Bewerten der Energieäquivalentinformation im Hinblick auf wenigstens ein Bewertungskriterium und Erzeugen einer ein Bewertungsergebnis beschreibenden Bewertungsinformation eingerichtet ist.
